# EUROPEAN PATENT SPECIFICATION

(11) **EP 2 025 217 B1**
(45) Date of publication and mention of the grant of the patent: **30.05.2012**
(21) Application number: 08156006.2
(22) Date of filing: 09.05.2008
(51) Int. Cl.: A01D 34/82, G05G 5/00, H01H 3/20

(54) **Actuating mechanism**
Auslösemechanismus
Mécanisme d'actionnement

(30) Priority: 15.08.2007 GB 0715912
(43) Date of publication of application: 18.02.2009
(73) Proprietor: Husqvarna UK Limited, County Durham, DL5 6UP (GB)
(72) Inventor: Smith, Ian, Thirsk Durham, Y07 2LJ (GB); Sparkes, Richard, Stanley Durham, DH9 9DT (GB)
(74) Representative: Pratt, David Martin

(56) References cited:
- DE-A1- 2 728 787
- DE-A1- 2 933 494
- DE-A1- 4 421 746
- DE-A1- 10 307 536
- GB-A- 1 404 309
- NL-A- 7 015 259

## Description

This invention relates to an actuating mechanism for a control device, and in particular to an actuating mechanism for actuating an electrically-powered lawnmower or other electrically-powered garden care equipment.

The switch of an electric lawnmower is usually attached to the handle of the lawnmower, and has an actuating mechanism (lever) which, in use, is squeezed by the operator to start the electric motor of the lawnmower. Before the switch can be actuated, however, a safety interlock button has to be depressed, so as to eliminate the chance of accidental starting. Once the machine has been started, pressure on this safety interlock button may be released.

Typically, the handle of a lawnmower is generally U-shaped, with the free ends of the arms of the U being attached to the body of the lawnmower, so that the base of the U can be gripped by the user to manoeuvre the lawnmower when in use. The switch for this type of lawnmower can be positioned centrally on the base of the U-shaped handle, with the lever extending from the switch generally parallel with the base of the U. The safety interlock button forms part of the switch, typically being positioned centrally thereof. Alternatively, the switch is attached to the top of one of the arms of the handle.

In order to facilitate actuation of the switch, it is known to provide the switch with two levers which extend on opposite sides of the switch generally parallel to the base of the U-shaped handle. It also known for each of the levers to be curved so that actuation of the switch can be carried out either by gripping that portion of the lever adjacent to the switch and pulling it towards the base of the U-shaped handle, or by gripping the free end portion of the lever and pulling it towards the adjacent arm of the handle.

In this case, each of the levers is made of a rigid ABS material, to ensure that a gripping action applied by a user produces a transformation (i.e. rotation) of that lever this type of lever the lever is curved to such a degree that its free end portion lies some 40mm away from the adjacent arm of the U-shaped handle. Such a spacing results in the reached pull of the lever at the distal end being in excess of the ergonomic ideal distance. Indeed, for an operator whose hands are small, actuation can be extremely difficult. Moreover, this relatively large spacing gives rise to the possibility of lever damage when the lawnmower is stored.

Another disadvantage of the known switch lever is that it has a radial clearance about its pivot axis, this clearance being essential for reasons of reliability and to take account of manufacturing tolerances. This radial clearance results in lever wobble in use, and this leads to a deterioration of the perceived quality of the switching mechanism by the user.

It is also known to position the switch of a lawnmower on one of the arms of a U-shaped handle, and to provide a lever extending either along that arm of the handle, or along the base of the handle. In the latter case, the lever will be curved. The disadvantage of this type of lever is that it provides only limited positions at which the switch can be actuated - typically either along the base of the handle or along the arm of the handle that carries the switch. Moreover, where the lever is curved and is typically made of ABS, its free end portion lies well away from the adjacent portion of the handle, and so is not ergonomically positioned.

DE 27 28 787 and DE 29 33 494 describe known actuating mechanisms. GB 1 404 309 discloses a further switching mechanism having the features of the preamble to claim 1.

Aspects of the invention are provided in the accompanying claims.

It is desirable to provide an actuating mechanism that is easy to operate ergonomically from a number of positions, and by using substantially the same force for each position.

Embodiments of the present invention provide a hand-operated actuating mechanism for a control device used to operate an electrically-powered garden machine, the actuating mechanism comprising a lever provided at one end with an actuator for operative engagement with the control device, wherein the lever is constituted by a first, relatively-rigid portion and a second, relatively-flexible portion, an anchoring member being positioned at the other end of the lever, whereby the application of a force to the lever causes the lever to flex relative to the anchoring member thereby to transmit a force to the actuator for control device actuation.

In an embodiment, the lever has two second, relatively-flexible portions. Advantageously, the first portion is curved, and the two second portions are substantially straight, being positioned at opposite ends of the first portion, and the actuator is integral with one of the second portions.

In an embodiment, the other second lever portion is integral with a support which is connectable to the handle of an electrically-powered lawnmower, the support constituting the anchoring member, and said other second lever portion constituting a flexible connection to the support.

The lever may be shaped to complement the handle.

Conveniently, the lever is made of polypropylene. Preferably, the lever is moulded in one piece to have a central portion, two end portions, the actuator and the anchoring member, the central portion having a first thickness, and the two end portions each having a thickness substantially less than that of the central portion, whereby the central portion constitutes the first lever portion and the two end portions constitute the second lever portions, and wherein the actuator is constituted by an extension of the end portion at said one end of the lever.

Advantageously, the first and second lever portions are provided with an overmoulding of soft rubber or rubber-like material.

In another embodiment, the other second lever portion is pivotally connected to a support which is connectable to the handle of an electrically-powered lawnmower, the support constituting the anchoring member.

Embodiments of the invention also provide a hand-operated switching mechanism for an electrically-powered lawnmower having a U-shaped handle constituted by a base portion and a pair of arms extending from opposite ends of the base portion, the switching mechanism comprising an actuating mechanism and a switch box having a switch, the switch box being attachable to the base portion of the handle, the actuating mechanism being as defined above and the switch constituting the control device, wherein the actuator is operatively associated with the switch box for turning the switch on and off.

The switching mechanism may further comprise a second actuating mechanism associated with the switch box, the second actuating mechanism being as defined above, and the two actuating mechanisms extending away from opposite sides of the switch box.

Preferably, each support is attachable to a respective arm of the handle, and each lever is shaped to complement that portion of the handle in the region joining the base portion to a respective one of the arms.

Embodiments of the invention further provide a lawnmower provided with a substantially U-shaped, manually-engageable operating handle and a hand-operated switching mechanism, the handle having a base portion and two substantially parallel arms extending from opposite ends of the base portion, the switching mechanism being as defined above, the switch box being attached to the base portion of the handle, and the or each actuating mechanism extending from the switch box along the base portion and along the adjacent portion of the respective arm.

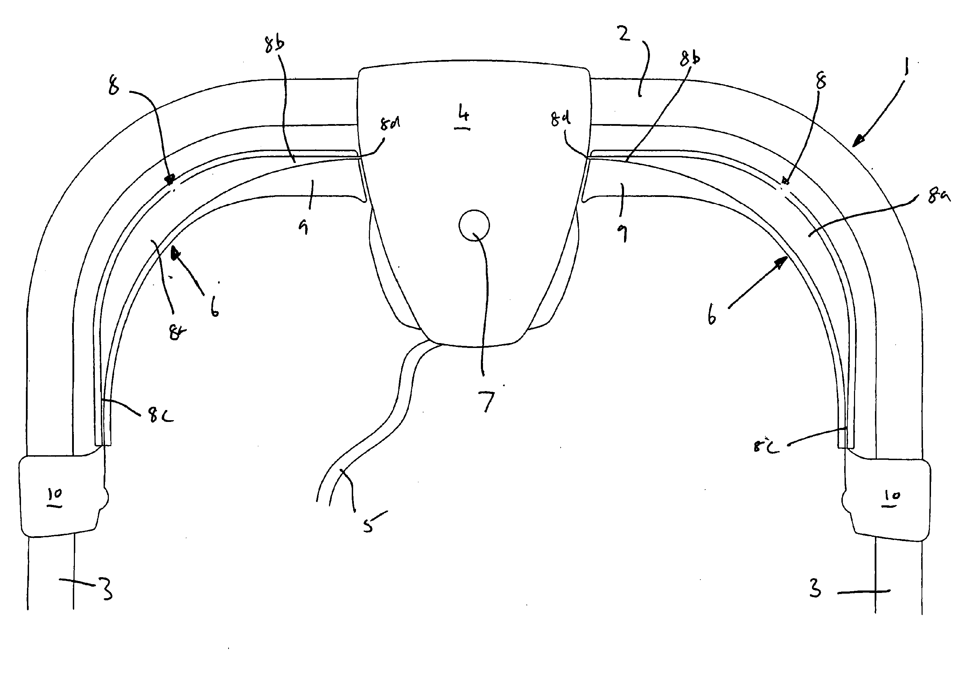

Embodiments of the invention will now be described in greater detail, by way of example, with reference to the drawing, the single figure of which shows the upper portion of the handle of an electrically-powered lawnmower.

Referring to the drawing, a lawnmower (not shown) is provided with a handle 1 of generally U-shaped configuration, the handle having a base portion 2 and a pair of arms 3. The free ends of the arms 3 (not shown) are attached to the body of the lawnmower.

A switch box 4 is mounted on the central portion of the base 2 of the handle 1, the switch box containing a switch (not shown) for controlling actuation of an electric motor (not shown) provided within the main body of the lawnmower via an electric cable 5. The switch box 4 is provided with a pair of levers 6 and a safety interlock button 7. Actuation of the switch box 4 can be effected by either of the levers 6 in combination with depression of the safety interlock button 7, as is the case for known switching arrangements for electrically-powered lawnmowers.

Each of the levers 6 has a main body portion 8 made of polypropylene, and is curved to complement the adjacent portion of the handle 1. The main body portion 8 of each lever 6 has a variable cross-section, being considerably thicker in its central portion 8a than in its upper end portion 8b or its lower end portion 8c. A respective extension portion (actuator) 8d, which is integrally moulded with the adjacent upper end portion 8b, extends from each main handle body portion 8 into the switch box 4, where it is connected to a switch (not shown) which is used to make and break an electric circuit for turning the electric motor on and off. Each lever 6 is provided with a thin overmoulding 9 made of soft rubber.

The lower end portion 8c of each lever 6 is integrally formed with a respective support 10 fixed to the associated arm 3 of the handle 1. This mounting of the levers 6 at their lower end portions 8c ensures that those end portions are always closely spaced from the adjacent arms 3, thereby providing an ergonomic advantage not provided by known switching arrangements having curved pivoting actuating levers.

The central portion 8a of each lever constitutes a rigid lever portion, whereas the end portions 8b and 8c constitute flexible lever portions. The lower end portions 8c are flexibly connected to their respective supports 10 by virtue of their inherent flexibility. The provision of the upper flexible portions 8b ensures that actuation of the switch box 4 by gripping one of those portions requires considerably less force than was the case with known switching mechanisms having rigid curved actuating levers. Moreover, the provision of the flexible lower end portions 8c of the levers 6, in conjunction with their flexible connection to the supports 10, ensures that the switch box 4 can be actuated from either of those lower end portions using a relatively small force, and with the lower end portions closely spaced with respect to their arms 3. Consequently, the switch box 4 can be actuated by either of the levers 6 in an ergonomic fashion by engagement of that lever at any portion along its length, and by using substantially the same gripping force for every such position. In particular, the switch box 4 can be actuated by gripping either of the levers at the normal three gripping positions (namely the upper portion 8b, the lower portion 8c or the central portion 8a) using a substantially similar force.

Because the supports 10 are fixed to the arms 3, the levers 6 do not wobble when gripped to actuate the switch box 4 even though the levers have end portions which are flexible. Furthermore, as the lower end portions 8c of the levers 6 are fixed by the supports 10 to lie closely adjacent to the arms 3, they do not move away from the arms 3 significantly when the switch box 4 is not actuated, thereby reducing the possibility of damage when the lawnmower is stored. Moreover, because the supports 10 are anchored to the arms 3, the application of a force to either of the levers 6 causes that lever to flex relative to its support, thereby transmitting a force to the associated extension cord 8d for switch actuation.

The overmoulding 9 applied to each of the levers 6 is not essential to the invention, as the advantages referred to above will still accrue in the absence of the overmoulding. The overmoulding 9 does, however, provide the user with good tactile contact with the levers 6, and so contributes to the ergonomic advantages of the actuating mechanism of the invention.

It will be apparent that modifications could be made to the actuating mechanism described above. For example, each of the lower lever portions 8c could be pivotally mounted to its respective support 10, rather than being integrally and flexibly formed therewith.

It will also be apparent that the actauting mechanism could be used to control mechanisms other than the switches of electrically-powered lawnmowers. For example, the control mechanism could be used to control the throttle of the engine of a petrol-powered lawnmower, or to control a start/stop operation of any associated control device.

As described above, the main advantage of this actuating mechanism is that switch actuation can be accomplished by gripping any portion of either of the levers 6 at any position therealong, the gripping force for actuation being substantially the same for each such position. Another advantage is that the levers 6 are shaped to complement the shape of the adjacent handle portions and lie closely adjacent thereto, thereby reducing the possibility of damage when the product is stored, and providing ergonomic switching features. Another advantage is that the levers 6 are made of a relatively cheap plastics material such as polypropylene, rather than of the more expensive ABS material from which such levers are normally made.

## Claims

1. A hand-operated actuating mechanism for a control device used to operate an electrically-powered garden machine, the actuating mechanism comprising a lever (6) provided at one end with an actuator (8d) for operative engagement with the control device, wherein the lever is constituted by a first, relatively-rigid portion (8a), and a second, relatively-flexible portion (8b, 8c), an anchoring member (10) being positioned at the other end of the lever, whereby the application of a force to the lever causes the lever to flex relative to the anchoring member thereby to transmit a force to the actuator for control device actuation, **characterised in that**
the lever (6) has two second, relatively-flexible portions (8b and 8c), wherein the first portion (8a) is curved, and the two second portions (8b, 8c) are substantially straight, being positioned at opposite ends of the first portion.

2. A mechanism as claimed in claim 1, wherein the actuator (8d) is integral with one of the second portions (8b).

3. A mechanism as claimed in claim 2, wherein the other second lever portion (8c) is integral with a support (10) which is connectable to the handle (1) of an electrically-powered lawnmower, the support constituting the anchoring member, and said other second lever portion constituting a flexible connection to the support.

4. A mechanism as claimed in claim 3, wherein the lever (6) is shaped to complement the handle (1).

5. A mechanism as claimed in any one of claims 1 to 4, wherein the lever (6) is made of polypropylene.

6. A mechanism as claimed in claim 5, wherein the lever (4) is moulded in one piece to have a central portion (8a), two end portions (8b, 8c), the actuator (8d) and the anchoring member (10), the central portion having a first thickness, and the two end portions each having a thickness substantially less than that of the central portion, whereby the central portion constitutes the first lever portion and the two end portions constitute the second lever portions, and wherein the actuator is constituted by an extension of the end portion at said one end of the lever, and the anchoring member is constituted by an extension of the end portion at said other end of the lever.

7. A mechanism as claimed in any one of claims 1 to 6, wherein the first and second lever portions (8b, 8c) are provided with an overmoulding of soft rubber or rubber-like material.

8. A mechanism as claimed in claim 2, wherein the other second lever portion (8c) is pivotally connected to a support (10) which is connectable to the handle (1) of an electrically-powered lawnmower, the support constituting the anchoring member.

9. A hand-operated switching mechanism for an electrically-powered lawnmower having a U-shaped handle (1) constituted by a base portion (2) and a pair of arms (3) extending from opposite ends of the base portion, the switching mechanism comprising an actuating mechanism and a switch box (4) having a switch, the switch box being attachable to the base portion of the handle, the actuating mechanism being as claimed in any one of claims 1 to 8 and the switch constituting the control device, wherein the actuator (8d) is operatively associated with the switch box for turning the switch on and off.

10. A switching mechanism as claimed in claim 9, further comprising a second actuating mechanism associated with the switch box (4), the second actuating mechanism being as claimed in any one of claims 1 to 8, and the two actuating mechanisms extending away from opposite sides of the switch box.

11. A switching mechanism as claimed in claim 10 when appendant to claim 3 or claim 8, wherein each support (10) is attachable to a respective arm (3) of the handle (1).

12. A switching mechanism as claimed in claim 11, wherein each lever (6) is shaped to complement that portion of the handle (1) in the region joining the base portion (2) to a respective one of the arms (3).

13. A lawnmower provided with a substantially U-shaped, manually-engageable operating handle (1) and a hand-operated switching mechanism, the handle having a base portion (2) and two substantially parallel arms (3) extending from opposite ends of the base portion, the switching mechanism being as claimed in any one of claims 9 to 12, the switch box (4) being attached to the base portion of the handle, and the or each actuating mechanism extending from the switch box along the base portion and along the adjacent portion of the respective arm.

## Patentansprüche

1. Handgehaltener Auslösemechanismus für ein Steuergerät, das zum Bedienen einer elektrisch betriebenen Gartenmaschine verwendet wird, wobei der Auslösemechanismus einen Hebel (6) umfasst, der an einem Ende mit einem Auslöser (8d) für einen Wirkeingriff mit dem Steuergerät versehen ist, wobei der Hebel durch einen ersten, relativ starren Abschnitt (8a) und einen zweiten, relativ flexiblen Abschnitt (8b, 8c) gebildet wird, wobei ein Verankerungselement (10) am anderen Ende des Hebels angeordnet ist, wobei das Anlegen einer Kraft an den Hebel bewirkt, dass sich der Hebel relativ zu dem Verankerungselement durchbiegt, wodurch eine Kraft an den Auslöser übertragen wird, um das Steuergerät zu betätigen, **dadurch gekennzeichnet, dass**
der Hebel (6) zwei zweite, relativ flexible Abschnitte (8b und 8c) aufweist, wobei der erste Abschnitt (8a) gekrümmt ist und die beiden zweiten Abschnitte (8b, 8c) im Wesentlichen gerade sind und an entgegengesetzten Enden des ersten Abschnitts angeordnet sind.

2. Mechanismus nach Anspruch 1, wobei der Auslöser (8d) mit einem der zweiten Abschnitte (8b) integral ausgebildet ist.

3. Mechanismus nach Anspruch 2, wobei der andere zweite Hebelabschnitt (8c) integral mit einer Abstützung (10) ausgebildet ist, die mit dem Handgriff (1) eines elektrisch betriebenen Rasenmähers verbunden werden kann, wobei die Abstützung das Verankerungselement bildet und der andere zweite Hebelabschnitt eine flexible Verbindung zu der Abstützung bildet.

4. Mechanismus nach Anspruch 3, wobei der Hebel (6) in seiner Form komplementär zu dem Handgriff (1) ausgebildet ist.

5. Mechanismus nach einem der Ansprüche 1 bis 4, wobei der Hebel (6) aus Polypropylen besteht.

6. Mechanismus nach Anspruch 5, wobei der Hebel (4) einstückig geformt ist und einen mittigen Abschnitt (8a), zwei Endabschnitte (8b, 8c), den Auslöser (8d) und das Verankerungselement (10) aufweist, wobei der mittige Abschnitt eine erste Dicke aufweist und die beiden zwei Endabschnitte jeweils eine Dicke aufweisen, die wesentlich geringer ist die die Dicke des mittigen Abschnitts, wobei der mittigen Abschnitt den ersten Hebelabschnitt bildet und die beiden Endabschnitte die zweiten Hebelabschnitte bilden, und wobei der Auslöser durch eine Verlängerung des Endabschnitts an dem einen Ende des Hebels gebildet wird und das Verankerungselement durch eine Verlängerung des Endabschnitts an dem anderen Ende des Hebels gebildet wird.

7. Mechanismus nach einem der Ansprüche 1 bis 6, wobei der erste und der zweite Hebelabschnitt (8b, 8c) mit einem weichen Gummi oder gummiartigen Material überformt sind.

8. Mechanismus nach Anspruch 2, wobei der andere zweite Hebelabschnitt (8c) an einer Abstützung (10) angelenkt ist, die mit dem Handgriff (1) eines elektrisch betriebenen Rasenmähers verbunden werden kann, wobei die Abstützung das Verankerungselement bildet.

9. Handbetätigter Schaltmechanismus für einen elektrisch betriebenen Rasenmäher mit einem U-förmigen Handgriff (1), der durch einen Basisabschnitt (2) und ein Paar Arme (3) gebildet wird, die sich von entgegengesetzten Enden des Basisabschnitts erstrecken, wobei der Schaltmechanismus einen Auslösemechanismus und einen Schaltkasten (4) umfasst, der einen Schalter aufweist, wobei der Schaltkasten an dem Basisabschnitt des Handgriffs angebracht werden kann, wobei der Auslösemechanismus ein Auslösemechanismus nach einem der Ansprüche 1 bis 8 ist und der Schalter das Steuergerät bildet, wobei der Auslöser (8d) mit dem Schaltkasten wirkverbunden ist, um den Schalter ein und aus zu schalten.

10. Schaltmechanismus nach Anspruch 9, der des Weiteren einen zweiten Auslösemechanismus umfasst, der dem Schaltkasten (4) zugeordnet ist, wobei der zweite Auslösemechanismus ein Auslösemechanismus nach einem der Ansprüche 1 bis 8 ist und die beiden Betätigungsmechanismen sich von gegenüberliegenden Seiten des Schaltkasten fort erstrecken.

11. Schaltmechanismus nach Anspruch 10, wenn von Anspruch 3 oder Anspruch 8 abhängig, wobei jede Abstützung (10) an einem jeweiligen Arm (3) des Handgriffs (1) angebracht werden kann.

12. Schaltmechanismus nach Anspruch 11, wobei jeder Hebel (6) so geformt ist, dass er zu jenem Abschnitt des Handgriffs (1) in der Region, die den Basisabschnitt (2) mit einem jeweiligen der Arme (3) Verbindet, komplementär ist.

13. Rasenmäher mit einem im Wesentlichen U-förmigen, manuell in Eingriff nehmbaren Bedienungshandgriff (1) und einem handbedienten Schaltmechanismus, wobei der Handgriff einen Basisabschnitt (2) und zwei im Wesentlichen parallele Arme (3) aufweist, die sich von gegenüberliegenden Enden des Basisabschnitts erstrecken, wobei der Schaltmechanismus ein Schaltmechanismus nach einem der Ansprüche 9 bis 12 ist, wobei der Schaltkasten (4) an dem Basisabschnitt des Handgriffs angebracht ist und wobei sich der oder jeder Auslösemechanismus von dem Schaltkasten entlang des Basisabschnitts und entlang des benachbarten Abschnitts des jeweiligen Arms erstreckt.

## Revendications

1. Mécanisme d'actionnement à commande manuelle pour un dispositif de commande utilisé pour faire fonctionner une machine de jardinage électrique, le mécanisme d'actionnement comprenant une manette (6) disposée à une extrémité avec un actionneur (8d) pour une coopération opérationnelle avec le dispositif de commande, dans lequel la manette est constituée d'une première portion relativement rigide (8a), et d'une seconde portion relativement flexible (8b, 8c), un élément d'ancrage (10) étant positionné à l'autre extrémité de la manette, moyennant quoi l'application d'une force sur la manette amène la manette à se fléchir par rapport à l'élément d'ancrage afin de transmettre ainsi une force à l'actionneur pour l'actionnement du dispositif de commande **caractérisé en ce que**
la manette (6) comporte deux secondes portions relativement flexibles (8b et 8c), dans laquelle la première portion (8a) est arrondie, et les deux secondes portions (8b, 8c) sont sensiblement droites, étant positionnées à des extrémités opposées de la première portion.

2. Mécanisme selon la revendication 1, dans lequel l'actionneur (8d) est solidaire d'une des secondes portions (8b).

3. Mécanisme selon la revendication 2, dans lequel l'autre seconde portion de manette (8c) est solidaire avec un support (10) qui peut être raccordé au guidon (1) d'une tondeuse électrique, le support constituant l'élément d'ancrage, et ladite autre seconde portion de manette constituant un raccord flexible au support.

4. Mécanisme selon la revendication 3, dans lequel la manette (6) est formée de façon à compléter le guidon (1).

5. Mécanisme selon l'une quelconque des revendications 1 à 4, dans lequel la manette (6) est constituée de poly(propylène).

6. Mécanisme selon la revendication 5, dans lequel la manette (4) est moulée d'une seule pièce de façon à avoir une portion centrale (8a), deux portions d'extrémité (8b, 8c), l'actionneur (8d) et l'élément d'ancrage (10), la portion centrale ayant une première épaisseur, et les deux portions d'extrémité ayant chacune une épaisseur sensiblement inférieure à celle de la portion centrale, moyennant quoi la portion centrale constitue la première portion de manette et les deux portions d'extrémité constituent les secondes portions de manette, et dans lequel l'actionneur est constitué par une extension de la portion d'extrémité à ladite une extrémité de la manette, et l'élément d'ancrage est constitué par une extension de la portion d'extrémité à ladite autre extrémité de la manette.

7. Mécanisme selon l'une quelconque des revendications 1 à 6, dans lequel les première et seconde portions de manette (8b, 8c) sont pourvues d'un surmoulage de caoutchouc souple ou d'un matériau de type caoutchouc.

8. Mécanisme selon la revendication 2, dans lequel l'autre seconde portion de manette (8c) est raccordée de façon pivotante à un support (10) qui peut être raccordé au guidon (1) d'une tondeuse électrique, le support constituant l'élément d'ancrage.

9. Mécanisme de commutation à commande manuelle pour une tondeuse électrique ayant un guidon en forme de U (1) constituée par une portion de base (2) et une paire de bras (3) s'étendant depuis des côtés opposés de la portion de base, le mécanisme de commutation comprenant un mécanisme d'actionnement et un boîtier d'interrupteur (4) ayant un interrupteur, le boîtier d'interrupteur pouvant être fixé à la portion de base du guidon, le mécanisme d'actionnement étant tel que revendiqué dans l'une quelconque des revendications 1 à 8 et l'interrupteur constituant le dispositif de commande, dans lequel l'actionneur (8d) est associé de manière opérationnelle avec le boîtier d'interrupteur pour activer et désactiver l'interrupteur.

10. Mécanisme de commutation selon la revendication 9, comprenant en outre un second mécanisme d'actionnement associé au boîtier d'interrupteur (4), le second mécanisme d'actionnement étant tel que revendiqué dans l'une quelconque des revendications 1 à 8, et les deux mécanismes d'actionnement s'étendant à distance des côtés opposés du boîtier d'interrupteur.

11. Mécanisme de commutation selon la revendication 10 lorsqu'elle dépend de la revendication 3 ou de la revendication 8, dans lequel chaque support (10) peut être fixé à un bras respectif (3) du guidon (1).

12. Mécanisme de commutation selon la revendication 11, dans lequel chaque manette (6) est formée de façon à compléter cette portion du guidon (1) dans la région rejoignant la portion de base (2) à l'un respectif des bras (3).

13. Tondeuse pourvue d'un guidon de manoeuvre à coopération manuelle sensiblement en forme de U (1) et d'un mécanisme de commutation à commande manuelle, le guidon ayant une portion de base (2) et deux bras sensiblement parallèles (3) s'étendant des extrémités opposées de la portion de base, le mécanisme de commutation étant selon l'une quelconque des revendications 9 à 12, le boîtier d'interrupteur (4) étant fixé à la portion de base du guidon, et le ou chaque mécanisme d'actionnement s'étendant du boîtier d'interrupteur le long de la portion de base et le long de la portion adjacente du bras respectif.
